(19) Europäisches Patentamt
European Patent Office
Office européen des brevets

(11) **EP 4 346 284 A1**

(12) **EUROPEAN PATENT APPLICATION**

(43) Date of publication:
**03.04.2024 Bulletin 2024/14**

(21) Application number: **23198526.8**

(22) Date of filing: **20.09.2023**

(51) International Patent Classification (IPC):
**H04W 36/08** (2009.01)   **H04W 56/00** (2009.01)
**H04W 74/0833** (2024.01)   **H04W 36/00** (2009.01)
**H04W 36/30** (2009.01)

(52) Cooperative Patent Classification (CPC):
**H04W 36/085; H04W 56/0045; H04W 56/0065;**
H04W 36/0077; H04W 36/30; H04W 74/0833

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.09.2022   US 202263411231 P
27.10.2022   US 202263419772 P
15.05.2023   US 202363466496 P
10.08.2023   US 202318447619**

(71) Applicant: **Samsung Electronics Co., Ltd.
Suwon-si, Gyeonggi-do 16677 (KR)**

(72) Inventors:
• **BAE, Jung Hyun
San Jose, CA, 95134 (US)**
• **CHENG, Yuan-Sheng
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **TIME ADVANCE MANAGEMENT FOR L1/L2-BASED MOBILITY ENHANCEMENT**

(57)     A method and an apparatus are provided in which a user equipment, UE, connected with a serving cell performs a random access channel, RACH, procedure for a non-serving cell. The UE acquires a time advance, TA, of the non-serving cell based on the RACH procedure. The UE performs an L1/L2-based handover from the serving cell to the non-serving cell with the acquired TA.

FIG. 3

EP 4 346 284 A1

**Description**

TECHNICAL FIELD

The disclosure generally relates to serving cell changes in a mobile communication system. More particularly, the subject matter disclosed herein relates to improvements to management of time advance (TA) in layer-1 (L1)/layer-2 (L2) mobility enhancement.

SUMMARY

In the current 5th generation (5G) new radio (NR) system, movement of a user equipment (UE) between coverage areas of different cells requires a serving cell change. Currently, a serving cell change is triggered by layer 3 (L3) measurements and is performed through a reconfiguration and synchronization triggered by radio resource control (RRC) signaling. The reconfiguration and synchronization enables the change of a primary cell (PCell) and a primary secondary cell group (SCG) cell (PSCell), as well as the release or addition of secondary cells (SCells) when applicable.

One issue with the above approach is that the serving cell change, which involves complete L2 and L1 resets, leads to longer latency, higher overhead, and longer interruption time than beam switch mobility.

To solve this problem, L1/L2 mobility enhancements may allow a serving cell change via L1/L2 signaling in order to reduce the latency, overhead, and interruption time. In order to change serving cells without L2/L1 being completely reset, some L2/L1 configuration of non-serving cells (e.g., candidate target PCells) should be included in current RRC configurations, before the handover (or the L1/L2-based serving cell change) conditions are triggered.

Systems and methods are provided herein to enhance the latency of inter-cell mobility, by acquiring and maintaining a TA of the configured non-serving cells before the handover occurs.

This approach improves on previous methods because it eliminates the latency associated with a random access channel (RACH) procedure during the handover.

In an embodiment, a method is provided in which a UE connected with a serving cell performs a RACH procedure for a non-serving cell. The UE acquires a TA of the non-serving cell based on the RACH procedure. The UE performs an L1/L2-based handover from the serving cell to the non-serving cell with the acquired TA.

In an embodiment, a UE is provided that includes a processor and a non-transitory computer readable storage medium storing instructions. When executed, the instructions cause the processor to perform a RACH procedure for a non-serving cell, acquire a TA of the non-serving cell based on the RACH procedure, and perform an L1/L2-based handover from the serving cell to the non-serving cell with the acquired TA.

BRIEF DESCRIPTION OF THE DRAWINGS

In the following section, the aspects of the subject matter disclosed herein will be described with reference to exemplary embodiments illustrated in the figures, in which:

FIG. 1 is a diagram illustrating a communication system, according to an embodiment;
FIG. 2 is a diagram illustrating an uplink (UL)-downlink (DL) timing relation, according to an embodiment;
FIG. 3 is a flowchart illustrating a method for performing an L1/L2-based handover from a serving cell to a non-serving cell, according to an embodiment; and
FIG. 4 is a block diagram of an electronic device in a network environment, according to an embodiment.

DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

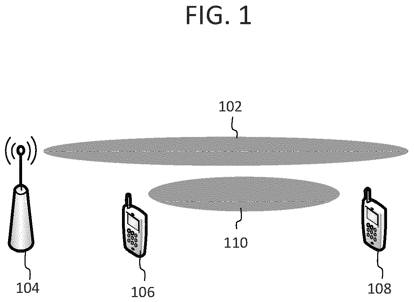

FIG. 1 is a diagram illustrating a communication system, according to an embodiment. In the architecture illustrated in FIG. 1, a control path 102 may enable the transmission of control information through a network established between a base station, AP, or a gNodeB (gNB) 104, a first UE 106, and a second UE 108. A data path 110 may enable the transmission of data (and some control information) between the first UE 106 and the second UE 108. The control path 102 and the data path 110 may be on the same frequency or may be on different frequencies.

In an orthogonal frequency-division multiplexing (OFDM)-based mobile system, in order to maintain intra-cell uplink orthogonality at a gNB side, the slot timing between arriving uplink traffic from different devices should be aligned. Specifically, a timing misalignment between received signals should fall within a cyclic prefix of OFDM symbols. In NR, this may be achieved by maintaining a TA for each device in the same cell, which is a procedure similar to that provided in Long Term Evolution (LTE).

The TA value (also referred to herein as 'TA') may be defined as the offset between UE DL and UL frames, and is formally defined as shown in Equation (1) below.

$$T_{\text{TA}} = \left(N_{\text{TA}} + N_{\text{TA,offset}}\right)T_{\text{c}}$$

$$\ldots(1)$$

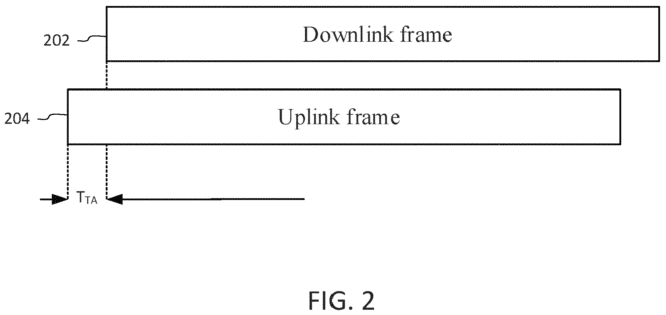

FIG. 2 is a diagram illustrating an UL-DL timing relation, according to an embodiment. An UL frame 202 for transmission from the UE starts $T_{\text{TA}} = (N_{\text{TA}} + N_{\text{TA,offset}})T_c$ before a beginning of a corresponding DL frame 204 at the UE.
$T_c$ is 0.509 $\mu$s, which is a sampling time assuming a subcarrier spacing (SCS) of 480kHz and a fast Fourier transform (FFT) size of 4096.
$N_{\text{TA,offset}}$ is configured by RRC parameter *n-TimingAdvanceOffset* per cell group, in a medium access control (MAC)-CellGroupConfig information element (IE). If this field is absent, a default value is defined based on a duplex mode and a frequency range of the serving cell, as shown in Table 1 below.

Table 1

| Frequency range and band of cell used for uplink transmission | $N_{\text{TA offset}}$ (Unit: Tc) |
|---|---|
| FR1 FDD or TDD band with neither E-UTRA-NR nor NB-IoT-NR coexistence case | 25600 (Note 1) |
| FR1 FDD band with E-UTRA-NR and/or NB-IoT-NR coexistence case | 0 (Note 1) |
| FR1 TDD band with E-UTRA-NR and/or NB-IoT-NR coexistence case | 39936 (Note 1) |
| FR2 | 13792 |
| Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell. Note 2: Void | |

$N_{\text{TA}}$ is received at the UE from a MAC control element (CE) TA command, which may have two versions.
A first version of the MAC CE TA command is an absolute TA command MAC CE. Typically received during a random access response (RAR), $T_A$, for a TA group (TAG) indicates $N_{\text{TA}}$ values through index values (e.g., $T_A = 0$, 1, 2, ..., 3846). An amount of the time alignment for the TAG with a SCS of $2^\mu \cdot 15$ kHz is $N_{\text{TA}} = T_A \cdot 16 \cdot 64/2^\mu$. This value is relative to the SCS of the first uplink transmission from the UE after reception of the RAR or absolute TA command MAC CE.
A second version of the MAC CE TA command is a TA command MAC CE. $T_A$ for a TAG indicates an adjustment of a current $N_{\text{TA}}$ value, $N_{\text{TA\_old}}$, to a new $N_{\text{TA}}$ value, $N_{\text{TA\_new}}$, by index values (e.g., $T_A = 0, 1, 2,..., 63$), where for a SCS of $2^\mu \cdot 15$ kHz, $N_{\text{TA\_new}} = N_{\text{TA\_old}} + (T_A - 31) \cdot 16 \cdot 64/2^\mu$.
Both TA commands described above are applied to a particular TAG. One cell group (CG) may configure up to four TAGs, and a TAG with a TAG-id is configured in *ServingCellConfig* for each serving cell (SpCell or SCell), where the TAG containing the SpCell has a TAG-id 0.
The TA sent through the MAC CE may be calculated at the gNB side either by a RACH procedure, or by continuing to monitor the timing of the UL traffic.
A RACH procedure is a usual means of acquiring a TA value, which may be initiated by the UE in different scenarios, such as, for example, initial access, beam failure recovery (BFR), etc. The RACH procedure may also be dynamically triggered by the gNB through downlink control information (DCI), which may be referred to as a physical downlink control channel (PDCCH) order.
The PDCCH order is a contention free random access (CFRA) procedure with which the gNB assigns the dedicated RACH resource to UE.
Except for the RACH procedure during initial access, the above-described TA-related procedures are for existing serving cells, and TA management for non-serving cells is lacking.

Extended TAG

For L1/L2 mobility, some form of RRC configuration should cover serving cell configurations as well as non-serving cell configurations, which refer to the candidate target cells. The non-serving cells may be synchronized or non-synchronized, and intra-frequency (synchronization signal block (SSB) of the cells is in the same frequency) and inter-frequency (SSB of the cells is not in the same frequency). They may also be configured in the form of cell groups.

A cell that is synchronized by a UE has a time and a frequency that are synchronized by detecting a corresponding SSB. The SSB may be configured to the cell or the SSB may be configured to a cell in a same cell group if an SSB configuration is missing. For TA management for a particular non-serving cell, it is assumed that the cell is synchronized in time and frequency from the UE.

TA management is typically based on TAGs, which may also be used in order to extend TA management to non-serving cells. Herein, these extended TA management concepts are referred to as extended TAGs (eTAGs) with eTAG identities (eTAG-id).

UE complexity may increase with extra TAGs depending on whether the non-serving cells are intra-frequency or inter-frequency. Accordingly, a maximum number of eTAGs used may be based on UE capability. An eTAG may be associated with cell groups like current TAG design. As such, since a main purpose for an eTAG is for L1/L2 mobility, and PCell to PCell (the PCell in the corresponding non-serving cell group configuration) mobility is the most important case, it may be reasonable to support only one eTAG per cell group. The eTAG-Config should be configured with associated non-serving cell groups in RRC.

Accordingly, for L1/L2-based mobility, eTAG may be supported. The maximum number of eTAGs supported for a UE for L1/L2-mobility may be based on UE capability. The UE capability may be reported separately for intra-frequency and inter-frequency. The UE capability may be reported in terms of the total number of supported eTAGs, or the number of supported eTAGs per cell group.

Additionally, there may be M eTAG configurations per non-serving cell group, where M is a predetermined number, and the actual number of eTAGs may not exceed a UE indicated capability. For a simpler design, M=1 eTAG per non-serving cell group.


gNB-Triggered TA Management

A procedure similar to a PDCCH order for triggering transmission of a physical RACH (PRACH) may be modified to support a dynamic triggered PRACH procedure for acquiring non-serving cells.

A PDCCH order may indicate a RA preamble index, a synchronization signal (SS)/physical broadcast channel (PBCH) index, a PRACH mask index, and/or an UL or supplementary UL (SUL) to the UE, and the UE may receive the SS block (SSB)/RACH configuration via RRC. The estimated TA is based on the TAG of the serving cell from which the PDCCH order is received.

For extended PDCCH, to estimate the TA of an eTAG for a non-serving cell group, the PRACH may be sent to the UL of the target non-serving cell group. The UE should at least be aware of which (non-serving) cell group UL PRACH is to be sent the PRACH. Accordingly, additional information, such as, for example, cell group id or corresponding eTAG-id, may be part of the extended PDCCH command. This additional information may be added in current reservation bits of the PDCCH order or by a new radio network temporary identifier (RNTI), depending on the cell group ID or eTAG-id

Accordingly, in order for an extended PDCCH order to trigger the UE to send a PRACH to a non-serving cell group, the target non-serving cell group's SSB configuration and RACH configuration may be configured in RRC signaling.

Additionally, in order for the extended PDCCH order to trigger the UE to send a PRACH to a non-serving cell group, the target cell group ID or eTAG-id should be provided in the PDCCH order. These identifiers may be provided by using reserved bits in current PDCCH orders, or may be encoded in RNTI scrambling the DCI.

In a current PDCCH order triggered RACH procedure, an RAR is always sent from the serving cell, since serving cell(s) (SpCell or SCell) are the targeted cell(s) to estimate the associated TA. For a PDCCH order initiated RACH procedure targeting non-serving cells, the cell actually sending the RAR may be either the serving cell or the non-serving cell.

While the candidate cell has the required information to send the RAR, it has certain drawbacks in L1/L2-based mobility.

First, sending the RAR from the candidate cell requires the UE to configure a receiver (e.g., spatial filter) according to the candidate cell until the end of receiving RAR information, which increases the interrupt time between the UE and the serving cell.

Second, the network may need to configure a type-1 PDCCH common search space (CSS) for each of the potential candidate cells, which increases the overall RRC overhead.

Therefore, an RAR may be sent from a serving cell when the PRACH is sent to the non-serving cell.

When the RACH is initiated by a PDCCH order, a quasi co-location (QCL) assumption on a PDCCH containing a DCI format 1_0 with a cyclic redundancy check (CRC) scrambled by the corresponding RA-RNTI depends on the cell the CFRA is targeted for. When CFRA is targeted for an SpCell, the UE may assume that the PDCCH that includes the DCI format 1_0 and the PDCCH order have the same DM-RS antenna port QCL properties. When the CFRA is targeted for a secondary cell, the UE may assume it has the same QCL properties of the control resource set (CORESET) associated with a Type1-PDCCH CSS set for receiving the PDCCH that includes the DCI format 1_0.

In the case of CFRA targeting a non-serving cell, the scenario is similar to targeting a secondary cell. Accordingly, the UE may assume the PDCCH has the same DM-RS antenna port QCL properties of the CORESET associated with the Type1-PDCCH CSS set for receiving the PDCCH that includes the DCI format 1_0. Alternatively, the UE may assume DMRS antenna port QCL properties as the PDCCH order.

Accordingly, for the PDCCH including DCI format 1_0 with CRC scrambled by RA-RNTI, the DMRS antenna port QCL assumption may be the same as the CORESET associated with Type-1 CSS for receiving PDCCH that includes DCI format 1_0, or the same as the one in the PDCCH order initiated the RACH procedure.

In the case of a PDCCH order initiated RACH procedure for a non-serving cell, a PRACH may be sent to a candidate cell in order to measure the TA(s) based on the reception of the PRACH. The final RAR information is transmitted from a serving cell to the UE, which means the RAR information including the TA should transfer to the serving cell, from non-serving cell, before being sent to the UE. This may not be an issue for an intra-distributed unit (DU) configuration (between serving cell and non-serving cell), but it may add extra delay for an inter-DU configuration. This may also cause issues for an RAR windows design.

The existing baseline RAR window begins at a first symbol of an earliest CORESET the UE is configured to receive a PDCCH for Type1-PDCCH CSS set (i.e., at least one symbol, after the last symbol of the PRACH occasion corresponding to the PRACH transmission).

Even if the serving cell and the candidate cell do not have synchronized frame boundaries, an RAR window timeline may be reused without issue. However, an issue remains regarding how to deal with the extra delay between the non-serving cell and the serving cell, notably in inter-DU configuration. For example, longer RAR windows may be used, or an extra delay may be added in the procedure of determining the start time of RAR windows.

RAR windows may be configured by *ra-ResponseWindow* in units of slots and may have a maximum duration of 10ms. Longer 40ms RAR windows introduce ambiguity of an RA-RNTI value, which is solved by 2 additional bits (LSBs of SFN) in DCI_format 1_0. Accordingly, if longer windows are needed to compensate for the delay in inter-DU, additional extra bits (larger than 2) may be included in DCI format 1_0.

For the adding of extra delay time, it may be more reasonable if the delay for message transmission between the serving cell and the non-serving cell is relatively stable and is a prerequisite.

Accordingly, for RAR windows for receiving PDCCH including DCI format 1_0 with CRC scrambled by RA-RNTI, in order to compensate extra delay for information transmission between the non-serving cell and the serving cell, the length of the RAR windows may be increased. RA-RNTI ambiguity may be solved by extra bits in DCI format 1_0, similar to NR-U.

Alternatively, extra delay may be added for determining the starting time of the RAR window. This extra delay is configured by the gNB.

An information non-serving cell, which will need to pass to a source cell, may be identified after receiving the PRACH from a UE, from the serving cell. Other than the estimated TA value, the candidate cell should forward the RA preamble identifier (RAPID) associated with a PRACH and the exact time and frequency resources the PRACH occupies. The latter is for calculating the corresponding RA-RNTI. The RAPID should be associated with this particular serving cell, otherwise, the non-serving cell may not know which cell the UE is connected to. However, the candidate has no other knowledge about the UE and therefore, cannot provide more information (e.g., a UE-ID).

Since the RAR is transmitted from the source cell, a case may also be considered in which multiple UEs in the same source cell use the same RAPID and RA-RNTI to trigger a PRACH towards different candidate cells. A gNB may not have full control for these two values other than to configure separate RACH resource groups. In this scenario, two UEs may listen and wait for the same RAR (in terms of RAPID or RA-RNTI) at the same time, and the RAR may cause ambiguity given the information it provides. For the same UE, this may not happen since the UE will transmit the PRACH to each candidate cell in different time/frequency resources so it will not have the same RA-RNTI. This can be treated as an error case and handled by the network by separating preamble resources for different candidate cells for different UEs. However, it may be difficult to implement such a partition for L1/L2-based mobility scenarios, considering that each UE has multiple different candidate cells. If such separation of RACH resources is not feasible, additional methods may be considered to solve the collision condition.

One solution is to include candidate cell information as part of the RAR. This may be realized by providing the information as part of DCI 1_0, through extra information in the MAC-PDU of the RAR (including new MAC-CE for this type of RAR), or by including the information in a new design of the RA-RNTI calculation.

Accordingly, for an RAR in response to the PRACH initiated by the PDCCH order for a non-serving cell during L1/L2-based mobility, a potential ambiguity due to collision may be handled by the network and a potential collision of the RAR may be an error case.

Alternatively, information to identify a candidate cell to which RAR belongs may be included in the RAR through extra bits in DCI format 1_0 with CRC scrambled by RA-RNTI, through extra information in the MAC-PDU of the RAR (or a new MAC-CE for this RAR), or by including it in a new design of RA-RNTI calculation.

Since the procedure relates to sending a PRACH to non-serving cells while a UE is still connected to the serving cells, there are multiple uplink priority related behaviors involving PRACH.

For a single cell operation with two UL carriers or for operation with carrier aggregation, if a total UE transmit power for PUSCH, PUCCH, PRACH, or SRS transmissions on serving cells in a frequency range in a respective transmission occasion $i$ would exceed $\hat{P}_{CMAX}(i)$, where $\hat{P}_{CMAX}(i)$ is the linear value of $P_{CMAX}(i)$ in transmission occasion $i$, the UE allocates power to PUSCH/PUCCH/PRACH/SRS transmissions according to a specific priority order so that the total UE transmit power for transmissions on serving cells in the frequency range is smaller than or equal to $\hat{P}_{CMAX}(i)$ for that frequency range in every symbol of transmission occasion $i$.

For the case of NR-dual connectivity (DC), the UE may perform transmission power control independently for a master cell group (MCG) and a secondary cell group (SCG), or may perform power sharing between two cell groups if the UE supports and is provided one of the NR-DC power sharing modes.

A PRACH transmission on the PCell has a highest priority (priority order 1) and a PRACH transmission on a serving cell other than PCell (secondary cell) has a lower priority (priority order 4). It is understandable that a PRACH on a PCell is the most critical. For example, it is used either when UL synchronization is lost or when requesting a scheduling request (SR) resource. Additionally, a PRACH for an SCell may have the least priority since the PCell remains in the connection mode, even if the SCell synchronization is lost.

However, in the case of a PRACH used for L1/L2-based mobility, a PRACH sent to the SCell may be used as a preparation stage for L1/L2-based cell switching to SCell, and as such, plays a more critical role.

Accordingly, for a PRACH transmission initiated by a PDCCH order targeting an SCell during L1/L2-based mobility, the PRACH priority order for power control may be increased to be one level below PRACH transmission on the PCell. Alternatively, the new priority may be the same level or one level below physical uplink control channel (PUCCH) or physical uplink shared channel (PUSCH) transmissions with a larger priority index. Alternatively, another priority order higher than the existing PRACH on SCell is not precluded.

A PRACH initiated by a PDCCH order targeting a non-serving cell is a transmission to a non-serving cell, so its priority order may not be limited by the traditional priority rule. Since a PRACH toward a non-serving cell plays an important role in L1/L2-based mobility procedure, the priority order should be on the higher end.

Accordingly, for a PRACH transmission initiated by a PDCCH order targeting a non-serving cell during L1/L2-based mobility, the PRACH priority order for power control may be treated as a transmission outside of an MCG and an SCG, and has higher priority than all transmissions in the MCG and the SCG. Alternatively, the PRACH priority order for power control may be treated as a special transmission of an MCG with the priority order in the higher end. The new priority order may be one level below PRACH transmission on the PCell, the same level or one level below PUCCH or PUSCH transmissions with larger priority index, or another priority order.

Methods for a time alignment command in a MAC CE may be reused and enhanced to support eTAG.

An absolute TA MAC CE command may not include TAG-id information because it is assumed to apply to the same TAG where this command is received. Given it is likely similar, RACH procedure is used for the non-serving cell. Specifically, the UE receives this command as part of an RAR in the target non-serving cell. The same or similar command may be reused.

For a TA MAC CE command to adjust $N_{TA}$ in TAG, it includes a TAG-id field, which has 2 bits to indicate the TAG-id in the cell group where this command is received.

In the case of TA management for a non-serving cell, the TA MAC CE command is expected to be received on the serving cell (SpCell). For a supporting eTAG, additional information to indicate the exact eTAG-id should be provided to apply the new TA value.

Accordingly, a TA MAC CE command may be enhanced to provide information on eTAG-id indication by either a modified TA with extra bits in order to indicate eTAG-id or a new command.

Alternatively, $N_{TA}$ for a non-serving cell may be indicated by DCI. This may be achieved by reusing the extended PDCCH order described above by repurposing reserved bits, or by a new DCI format.

Accordingly, DCI may be used to indicate a TA adjustment for a non-serving cell in L1/L2-based mobility, through a modified extended PDCCH order with additional information added in reserved bits, or through a new dedicated DCI format.

## UE-Triggered TA Management

An alternative approach to acquire an initial TA for a non-serving cell may be triggered by the UE.

A gNB may configure a non-serving cell group in RRC with the RACH and SSB information, with or without a dedicated UE-specific RACH occasion. The UE decides when it is available to start the RACH procedure, and this can be limited within a duration time $T_{max}$, after the PDSCH containing the RRC reconfiguration involving the non-serving cell configuration is acknowledged. This may also be triggered by certain condition(s) associated with L1 measurement on candidate cell(s). For example, L1-RSRP associated with a candidate cell may be larger than a threshold determined by the L1-RSRP associated with a current serving cell.

Alternatively, this may be triggered by a threshold involving time, for example, in a scheme in which a UE may be required to update a TA after a last TA acquisition to maintain updated TA information for candidate cells. In such a scheme, the time duration may be configured by a gNB and may depend on UE capability.

In a measurement report for the target non-serving cells, the UE may indicate two lists of non-serving cells, one having TA available and one not having TA available. Alternatively, this information may be sent to the gNB after the L1/L2-based serving cell condition is triggered.

In this approach, the TA may or may not be available for the non-serving cell when the serving cell changes. If the TA is available, the UE switches to the serving cell with the established TA. If the TA is not available, a fall back procedure for additional CFRA or contention-based RA (CBRA) is involved during the serving cell change procedure.

Accordingly, an initial TA acquisition for non-serving cells may be triggered by the UE. The gNB may configure dedicated RACH resources for the TA acquisition procedure. The UE may start a RACH procedure any time after the RRC reconfiguration with this configuration or within a limit time duration $T_{max}$. The RACH procedure may also be triggered by certain conditions. For example, a condition may be associated with an L1 measurement on candidate cell(s) (e.g., L1-RSRP associated with a candidate cell is larger than a threshold determined by the L1 RSRP associated with a current serving cell). As another example, a condition may be associated with a threshold involving time (e.g., schemes in which a UE is required to update a TA after a certain time). The certain time may be configured by a gNB and depends on UE capability. If the serving cell changes to a non-serving cell whose TA is not yet acquired by UE, or the TA value is out of date, a fall back procedure with additional CFRA or CBRA process may be required.

## RACH-less Based TA Management

Alternatively, L1/L2-based mobility may work in scenarios such as small cell environments so that at least some target non-serving cells have a very small $N_{TA}$ value, similar to a RACH-less handover condition. In these scenarios, no TA acquisition before or during switching to candidate cells is required ($N_{TA}= 0$). In an alternative condition, a gNB may have knowledge of a candidate cell's TA already (e.g., it expects the candidate cell(s) will have similar TA value associated with one of the current serving cell(s)). Other options including a derived TA value may also be considered.

Accordingly, at least some of the target non-servings cells may be directly configured by a gNB without a RACH process, similar to a RACH-less handover mechanism. The candidate value may be at least one of i) '0'; ii) the same TA as some of the serving cell(s); and iii) a value derived from previous two values based on different conditions.

## Fall-Back Mode to CFRA or CBRA RACH Procedure

For a UE-triggered RACH procedure, a TA for the target candidate cell may not be available or may be outdated when the cell switch command is received. This may happen for a gNB-triggered TA acquisition method as well.

Under certain scenarios, the TA may still not be available when L1/L2-based cell switching commands (handover) happen. For example, the time duration may be too short for a RACH procedure to be completed after the RRC reconfiguration and before potential L1/L2-based cell switching happens. A fall back procedure to legacy RACH, CFRA, or CBRA may be used during the cell switching procedure (handover).

Accordingly, when TA information is not available or out of date when receiving the L1/L2-based cell switching commands, a fall back procedure to a legacy RACH may be used during the L1/L2-based cell switching procedure (handover).

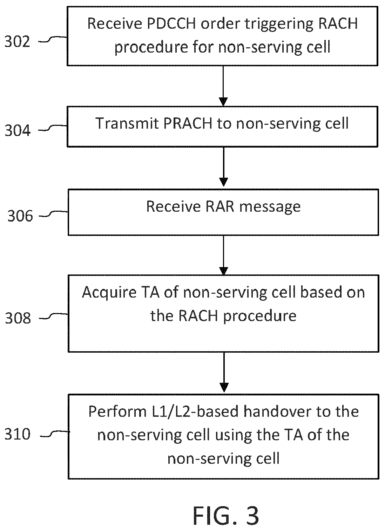

FIG. 3 is a flowchart illustrating a method for performing an L1/L2-based handover from a serving cell to a non-serving cell, according to an embodiment.

At 302, a UE receives, from a gNB of a serving cell, a PDCCH order triggering a RACH procedure for a non-serving cell. An SSB configuration and a RACH configuration of a non-serving cell group may be configured in RRC signaling. The PDCCH order may include an identifier of a cell group or a TAG for non-serving cells through reserved bits of the PDCCH order or through encoding in RNTI scrambling of the DCI of the PDCCH order. Alternatively, the PDCCH order may include reserved bits indicating a TA adjustment for the non-serving cell, or a DCI format indicating the TA adjustment for the non-serving cell.

At 304, the UE transmits a PRACH to the non-serving cell. A power control priority level for transmitting the PRACH may be one level below a PRACH transmission on the serving cell, or on a same level or one level below a PUCCH or a PUSCH transmission with a higher priority index. A power control priority level for transmitting the PRACH may be based on the PRACH transmission being a transmission outside of a MCG and a SCG and having a higher priority than transmissions in the MCG and the SCG.

At 306, the UE receives an RAR message from the serving cell. The RAR message may be received over a DMRS antenna port with a QCL that is the same as a CORESET associated with a CSS for receiving a PDCCH, or the same as a QCL in the PDCCH order triggering the RACH procedure. The RAR message may include a TA command for a TAG for non-serving cells. A number of non-serving cell TAGs able to be supported by the UE, per cell group, may be based on an intra-frequency capability or an inter-frequency capability of the UE. The TA command may include additional bits to indicate an identifier of the TAG. The RAR may be received in an RAR window having an increased length. RA-RNTI ambiguity may be resolved by extra bits in a DCI format. A delay for determining a starting time of the RAR window may be configured by the serving cell. The RAR may include information identifying the non-serving cell through extra bits in a DCI format, a MAC-PDU of the RAR, or an RA-RNTI calculation.

At 308, the UE acquires a TA of the non-serving cell based on the RACH procedure. At 310, the UE performs L1/L2-based handover from the serving cell to the non-serving cell using the TA of the non-serving cell.

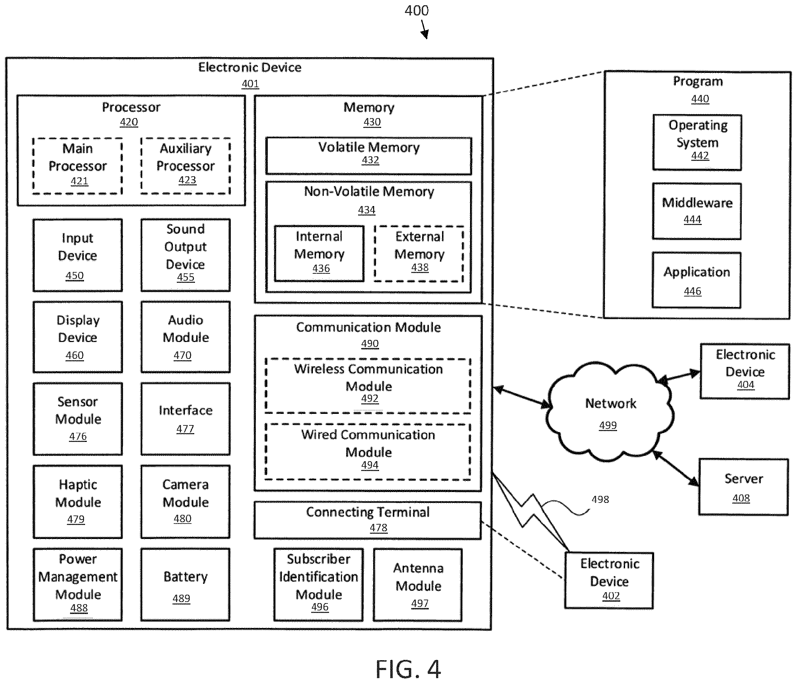

FIG. 4 is a block diagram of an electronic device in a network environment 400, according to an embodiment.

Referring to FIG. 4, an electronic device 401 in a network environment 400 may communicate with an electronic device 402 via a first network 498 (e.g., a short-range wireless communication network), or an electronic device 404 or a server 408 via a second network 499 (e.g., a long-range wireless communication network). The electronic device 401 may communicate with the electronic device 404 via the server 408. The electronic device may be embodied as the UE described above with respect to FIGS. 1-3. The electronic device 401 may include a processor 420, a memory 430, an input device 450, a sound output device 455, a display device 460, an audio module 470, a sensor module 476, an interface 477, a haptic module 479, a camera module 480, a power management module 488, a battery 489, a communication module 490, a subscriber identification module (SIM) card 496, or an antenna module 497. In one embodiment, at least one (e.g., the display device 460 or the camera module 480) of the components may be omitted from the electronic device 401, or one or more other components may be added to the electronic device 401. Some of the components may be implemented as a single integrated circuit (IC). For example, the sensor module 476 (e.g., a fingerprint sensor, an iris sensor, or an illuminance sensor) may be embedded in the display device 460 (e.g., a display).

The processor 420 may execute software (e.g., a program 440) to control at least one other component (e.g., a hardware or a software component) of the electronic device 401 coupled with the processor 420 and may perform various data processing or computations.

As at least part of the data processing or computations, the processor 420 may load a command or data received from another component (e.g., the sensor module 476 or the communication module 490) in volatile memory 432, process the command or the data stored in the volatile memory 432, and store resulting data in non-volatile memory 434. The processor 420 may include a main processor 421 (e.g., a central processing unit (CPU) or an application processor (AP)), and an auxiliary processor 423 (e.g., a graphics processing unit (GPU), an image signal processor (ISP), a sensor hub processor, or a communication processor (CP)) that is operable independently from, or in conjunction with, the main processor 421. Additionally or alternatively, the auxiliary processor 423 may be adapted to consume less power than the main processor 421, or execute a particular function. The auxiliary processor 423 may be implemented as being separate from, or a part of, the main processor 421.

The auxiliary processor 423 may control at least some of the functions or states related to at least one component (e.g., the display device 460, the sensor module 476, or the communication module 490) among the components of the electronic device 401, instead of the main processor 421 while the main processor 421 is in an inactive (e.g., sleep) state, or together with the main processor 421 while the main processor 421 is in an active state (e.g., executing an application). The auxiliary processor 423 (e.g., an image signal processor or a communication processor) may be implemented as part of another component (e.g., the camera module 480 or the communication module 490) functionally related to the auxiliary processor 423.

The memory 430 may store various data used by at least one component (e.g., the processor 420 or the sensor module 476) of the electronic device 401. The various data may include, for example, software (e.g., the program 440) and input data or output data for a command related thereto. The memory 430 may include the volatile memory 432 or the non-volatile memory 434. Non-volatile memory 434 may include internal memory 436 and/or external memory 438.

The program 440 may be stored in the memory 430 as software, and may include, for example, an operating system (OS) 442, middleware 444, or an application 446.

The input device 450 may receive a command or data to be used by another component (e.g., the processor 420) of the electronic device 401, from the outside (e.g., a user) of the electronic device 401. The input device 450 may include, for example, a microphone, a mouse, or a keyboard.

The sound output device 455 may output sound signals to the outside of the electronic device 401. The sound output device 455 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 460 may visually provide information to the outside (e.g., a user) of the electronic device 401. The display device 460 may include, for example, a display, a hologram device, or a projector and control circuitry to control a corresponding one of the display, hologram device, and projector. The display device 460 may include touch circuitry adapted to detect a touch, or sensor circuitry (e.g., a pressure sensor) adapted to measure the intensity of force incurred by the touch.

The audio module 470 may convert a sound into an electrical signal and vice versa. The audio module 470 may obtain the sound via the input device 450 or output the sound via the sound output device 455 or a headphone of an external electronic device 402 directly (e.g., wired) or wirelessly coupled with the electronic device 401.

The sensor module 476 may detect an operational state (e.g., power or temperature) of the electronic device 401 or an environmental state (e.g., a state of a user) external to the electronic device 401, and then generate an electrical signal or data value corresponding to the detected state. The sensor module 476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 477 may support one or more specified protocols to be used for the electronic device 401 to be coupled with the external electronic device 402 directly (e.g., wired) or wirelessly. The interface 477 may include, for example, a high- definition multimedia interface (HDMI), a universal serial bus (USB) interface, a secure digital (SD) card interface, or an audio interface.

A connecting terminal 478 may include a connector via which the electronic device 401 may be physically connected with the external electronic device 402. The connecting terminal 478 may include, for example, an HDMI connector, a USB connector, an SD card connector, or an audio connector (e.g., a headphone connector).

The haptic module 479 may convert an electrical signal into a mechanical stimulus (e.g., a vibration or a movement) or an electrical stimulus which may be recognized by a user via tactile sensation or kinesthetic sensation. The haptic module 479 may include, for example, a motor, a piezoelectric element, or an electrical stimulator.

The camera module 480 may capture a still image or moving images. The camera module 480 may include one or more lenses, image sensors, image signal processors, or flashes. The power management module 488 may manage power supplied to the electronic device 401. The power management module 488 may be implemented as at least part of, for example, a power management integrated circuit (PMIC).

The battery 489 may supply power to at least one component of the electronic device 401. The battery 489 may include, for example, a primary cell which is not rechargeable, a secondary cell which is rechargeable, or a fuel cell.

The communication module 490 may support establishing a direct (e.g., wired) communication channel or a wireless communication channel between the electronic device 401 and the external electronic device (e.g., the electronic device 402, the electronic device 404, or the server 408) and performing communication via the established communication channel. The communication module 490 may include one or more communication processors that are operable independently from the processor 420 (e.g., the AP) and supports a direct (e.g., wired) communication or a wireless communication. The communication module 490 may include a wireless communication module 492 (e.g., a cellular communication module, a short-range wireless communication module, or a global navigation satellite system (GNSS) communication module) or a wired communication module 494 (e.g., a local area network (LAN) communication module or a power line communication (PLC) module). A corresponding one of these communication modules may communicate with the external electronic device via the first network 498 (e.g., a short-range communication network, such as BLUETOOTH™, wireless-fidelity (Wi-Fi) direct, or a standard of the Infrared Data Association (IrDA)) or the second network 499 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 492 may identify and authenticate the electronic device 401 in a communication network, such as the first network 498 or the second network 499, using subscriber information (e.g., international mobile subscriber identity (IMSI)) stored in the subscriber identification module 496.

The antenna module 497 may transmit or receive a signal or power to or from the outside (e.g., the external electronic device) of the electronic device 401. The antenna module 497 may include one or more antennas, and, therefrom, at least one antenna appropriate for a communication scheme used in the communication network, such as the first network 498 or the second network 499, may be selected, for example, by the communication module 490 (e.g., the wireless communication module 492). The signal or the power may then be transmitted or received between the communication module 490 and the external electronic device via the selected at least one antenna.

Commands or data may be transmitted or received between the electronic device 401 and the external electronic device 404 via the server 408 coupled with the second network 499. Each of the electronic devices 402 and 404 may be a device of a same type as, or a different type, from the electronic device 401. All or some of operations to be executed at the electronic device 401 may be executed at one or more of the external electronic devices 402, 404, or 408. For example, if the electronic device 401 should perform a function or a service automatically, or in response to a request from a user or another device, the electronic device 401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 401. The electronic device 401 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

**Claims**

1. A method comprising:

   performing, by a user equipment, UE, connected with a serving cell, a random access channel, RACH, procedure for a non-serving cell;
   acquiring, by the UE, a time advance, TA. of the non-serving cell based on the RACH procedure; and
   performing, by the UE, a layer-1, L1, / layer-2, L2, -based handover from the serving cell to the non-serving cell with the acquired TA.

**2.** The method of claim 1, further comprising:
receiving, by the UE, a physical downlink control channel, PDCCH, order triggering the RACH procedure for the non-serving cell, from a gNodeB, gNB, of the serving cell, wherein a synchronization signal block, SSB, configuration and a RACH configuration of a non-serving cell group are configured in radio resource control, RRC, signaling.

**3.** The method of claim 2, wherein the PDCCH order comprises an identifier of a cell group or a TA group, TAG, for non-serving cells through reserved bits of the PDCCH order or through encoding in radio network temporary identifier, RNTI, scrambling of downlink control information, DCI, of the PDCCH order

**4.** The method of claim 1, further comprising:
receiving, by the UE, a PDCCH order triggering the RACH procedure for the non-serving cell, from a gNB of the serving cell, wherein the PDCCH order comprises an identifier of a cell group or a TA group, TAG, for non-serving cells through reserved bits of the PDCCH order or through encoding in radio network temporary identifier, RNTI, scrambling of downlink control information, DCI, of the PDCCH order.

**5.** The method of any one of claims 1 to 4, wherein performing the RACH procedure comprises transmitting a physical RACH, PRACH, from the UE, to a non-serving cell, and wherein a power control priority level for transmitting the PRACH is different from that of a PRACH transmission on the serving cell.

**6.** The method of claim 5, wherein power control priority level for transmitting the PRACH is one level below the PRACH transmission the serving cell, or on a same level or one level below a physical uplink control channel, PUCCH, or physical uplink shared channel, PUSCH, transmission with a higher priority index.

**7.** The method of claim 1, wherein performing the RACH procedure comprises transmitting a PRACH to a non-serving cell, and wherein a power control priority level for transmitting the PRACH is based on the PRACH transmission being a transmission outside of a master cell group, MCG, and a secondary cell group, SCG, and having a higher priority than transmission in the MCG and the SCG.

**8.** The method of claim 1, wherein performing the RACH procedure comprises receiving, by the UE, from the serving cell, a random access response, RAR, message over a demodulation reference signal, DMRS, antenna port with a quasi co-location, QCL, that is the same as:

a control resource set, CORESET, associated with a common search space, CSS, for receiving a PDCCH; or
a QCL in a PDCCH order triggering the RACH procedure.

**9.** The method of claim 1, wherein:

performing the RACH procedure comprises receiving, by the UE, from the serving cell, an RAR message comprising a TA command for a TAG for non-serving cells; and
the TA of the non-serving cell is acquired based on a TA index value in the TA command.

**10.** The method of claim 9, wherein a number of non-serving cell TAGs able to be supported by the UE, per UE or per cell group, is based on a UE capability, wherein the UE capability is based on an intra-frequency capability or an inter-frequency capability of the UE.

**11.** The method of claim 9 or 10, wherein the TA command comprises additional bits to indicate an identifier of the TAG.

**12.** The method of claim 1, wherein performing the RACH procedure comprises receiving, by the UE, from the serving cell, an RAR in an RAR window, wherein:

the RAR window has an increased length, and random access-RNTI, RA-RNTI, ambiguity is resolved by extra bits in a DCI format; or
a delay for determining a starting time of the RAR window is configured by the serving cell.

**13.** The method of claim 1, wherein performing the RACH procedure comprises receiving, by the UE, from the serving cell, an RAR comprising information identifying a non-serving cell, and wherein the information is provided through extra bits in a DCI format, a medium access protocol, MAC, -packet data unit, PDU, of the RAR, or RA-RNTI calculation.

**14.** The method of claim 1, further comprising triggering, by the UE, the RACH procedure, wherein:

the RACH procedure is triggered after RRC reconfiguration;
the RACH procedure is triggered based on an L1 measurement on non-serving cells being larger than a threshold associated with a serving cell; or
the RACH procedure is triggered based on a time threshold.

**15.** A user equipment, UE, comprising:

a processor; and
a non-transitory computer readable storage medium storing instructions that, when executed, cause the processor to the method according to any one of claims 1 to 14.

FIG. 1

202 ⌐ | Downlink frame |

204 ⌐ | Uplink frame |

$T_{TA}$

FIG. 2

302 — Receive PDCCH order triggering RACH procedure for non-serving cell

304 — Transmit PRACH to non-serving cell

306 — Receive RAR message

308 — Acquire TA of non-serving cell based on the RACH procedure

310 — Perform L1/L2-based handover to the non-serving cell using the TA of the non-serving cell

FIG. 3

FIG. 4

Europäisches
Patentamt

European
Patent Office

Office européen
des brevets

**EUROPEAN SEARCH REPORT**

Application Number

EP 23 19 8526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/219255 A1 (ZHANG QIAN [US] ET AL) 15 July 2021 (2021-07-15) | 1-4, 8-11, 13-15 | INV. H04W36/08 H04W56/00 |
| A | * figure 3 * <br> * paragraph [0006] – paragraph [0008] * <br> * paragraph [0041] – paragraph [0056] * <br> ----- | 5-7,12 | H04W74/0833 <br><br> ADD. H04W36/00 |
| X | WO 2022/130207 A1 (ERICSSON TELEFON AB L M [SE]) 23 June 2022 (2022-06-23) | 1-4, 8-11, 13-15 | H04W36/30 |
| A | * figures 9,13,14,16 * <br> * paragraph [0005] – paragraph [0008] * <br> * paragraph [0074] – paragraph [0185] * <br> ----- | 5-7,12 | |
| Y | HUAWEI ET AL: "Solutions for L1/L2 mobility", 3GPP DRAFT; R2-2207738, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Electronic meeting; 20220817 – 20220829 10 August 2022 (2022-08-10), XP052261056, Retrieved from the Internet: URL:https://ftp.3gpp.org/tsg_ran/WG2_RL2/TSGR2_119-e/Docs/R2-2207738.zip R2-2207738 Solutions for L1 L2 mobility.docx [retrieved on 2022-08-10] | 1-4, 8-11, 13-15 | |
| A | * paragraphs [02.4], [02.5], [005.] * <br> ----- <br> -/-- | 5-7,12 | |

**TECHNICAL FIELDS SEARCHED (IPC)**

H04W

The present search report has been drawn up for all claims

| Place of search | Date of completion of the search | Examiner |
|---|---|---|
| Munich | 7 February 2024 | Bösch, Michael |

EPO FORM 1503 03.82 (P04C01)

Europäisches
Patentamt
European
Patent Office
Office européen
des brevets

# EUROPEAN SEARCH REPORT

**Application Number**

EP 23 19 8526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LG ELECTRONICS INC: "Discussion on L1/L2 mobility", 3GPP DRAFT; R2-2208325, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. electronic; 20220801 10 August 2022 (2022-08-10), XP052261635, Retrieved from the Internet: URL:https://ftp.3gpp.org/tsg_ran/WG2_RL2/TSGR2_119-e/Docs/R2-2208325.zip R2-2208325_Discussion on L1L2 mobility_r3.docx [retrieved on 2022-08-10] | 1-4, 8-11, 13-15 | |
| A | * paragraph [002.] * ----- | 5-7,12 | |
| A | US 2018/332507 A1 (FUJISHIRO MASATO [JP] ET AL) 15 November 2018 (2018-11-15) * figures 8,13,14 * * paragraph [0003] - paragraph [0005] * * paragraph [0031] * * paragraph [0126] - paragraph [0135] * * paragraph [0183] - paragraph [0217] * ----- | 1-15 | **TECHNICAL FIELDS SEARCHED (IPC)** |
| A | US 2012/300714 A1 (NG BOON LOONG [US] ET AL) 29 November 2012 (2012-11-29) * figures 5A-6B * * paragraph [0004] - paragraph [0006] * * paragraph [0062] - paragraph [0098] * * paragraph [0170] * ----- | 1-15 | |

The present search report has been drawn up for all claims

| Place of search | Date of completion of the search | Examiner |
|---|---|---|
| Munich | 7 February 2024 | Bösch, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 8526

This annex lists the patent family members relating to the patent documents cited in the above-mentioned European search report.
The members are as contained in the European Patent Office EDP file on
The European Patent Office is in no way liable for these particulars which are merely given for the purpose of information.

07-02-2024

| Patent document cited in search report | | | Publication date | Patent family member(s) | | | Publication date |
|---|---|---|---|---|---|---|---|
| US 2021219255 | A1 | | 15-07-2021 | BR | 112022013151 | A2 | 18-10-2022 |
| | | | | CN | 115039458 | A | 09-09-2022 |
| | | | | EP | 4088516 | A1 | 16-11-2022 |
| | | | | KR | 20220127240 | A | 19-09-2022 |
| | | | | TW | 202130204 | A | 01-08-2021 |
| | | | | US | 2021219255 | A1 | 15-07-2021 |
| | | | | WO | 2021141831 | A1 | 15-07-2021 |
| WO 2022130207 | A1 | | 23-06-2022 | EP | 4260617 | A1 | 18-10-2023 |
| | | | | US | 2024023045 | A1 | 18-01-2024 |
| | | | | WO | 2022130207 | A1 | 23-06-2022 |
| US 2018332507 | A1 | | 15-11-2018 | JP | 6405476 | B2 | 17-10-2018 |
| | | | | JP | 6507298 | B2 | 24-04-2019 |
| | | | | JP | 2019024211 | A | 14-02-2019 |
| | | | | JP | WO2017130852 | A1 | 22-11-2018 |
| | | | | US | 2018332507 | A1 | 15-11-2018 |
| | | | | US | 2020367118 | A1 | 19-11-2020 |
| | | | | WO | 2017130852 | A1 | 03-08-2017 |
| US 2012300714 | A1 | | 29-11-2012 | AU | 2012254356 | A1 | 19-12-2013 |
| | | | | CN | 103597765 | A | 19-02-2014 |
| | | | | EP | 2705621 | A2 | 12-03-2014 |
| | | | | JP | 2014518041 | A | 24-07-2014 |
| | | | | KR | 20140031228 | A | 12-03-2014 |
| | | | | US | 2012300714 | A1 | 29-11-2012 |
| | | | | WO | 2012153960 | A2 | 15-11-2012 |

EPO FORM P0459

For more details about this annex : see Official Journal of the European Patent Office, No. 12/82